# EUROPEAN PATENT APPLICATION

(11) **EP 0 960 952 A1**
(43) Date of publication of application: **01.12.1999**
(21) Application number: 98122365.4
(22) Date of filing: 25.11.1998
(51) Int. Cl.: C22B 7/02, C22B 1/244

(54) **Method for the recycling of iron oxide containing residues from steel-making processes by means of briquetting**

(30) Priority: 27.05.1998 IT GE980041
(71) Applicant: Gloster N.V., Curacao (AN)
(72) Inventor: Kamperveen, Heinrich J., c/o Gloster N.V., Curacao (AN); Arts,Xander R.M., c/o Gloster N.V., Curacao (AN)
(74) Representative: Porsia, Attilio, Dr.

(57) **Abstract**

Method for the recycling of powders deriving from the working processes for steel or like, through the manufacture of briquets, including the following steps:
a) metering of the powders, stored in suitable containers, with a suitable primary binder, possibly a secondary binder and one or more additives;
b) mixing of the components added in the previous step;
c) compressing of the mixture thus obtained and forming of the briquets and following drying; and
d) introduction of the briquets into the furnace and melting.

The primary binder being either liquid or solid and preferably from vegetable origin, such as lignin, starch, molasses and boiled linseed oil.

## Description

The present invention relates to a method for the recycling of the powders deriving from the working processes for steel or like, through the manufacture of briquets, and to the briquets thus manufactured.

During the melting and refining processes of steel in electric arc furnaces, in ladle-furnaces and in converters, from 12 to 20 kg of powders are produced for every ton of steel, said powders having different compositions, substantially consisting of oxides from different metals. The fumes produced during the melting and refining processes described above, containing said powders, are sucked by the suction system, and the powders are collected, by means of electrofilters or bag filters, and then stored in silos or bags. Today such powders, at first classed as toxic-injurious waste and then as special non-dangerous waste, must be disposed of in suitable dumps, thus resulting in constantly rising costs, also due to the rapid space reduction in of the disposal areas.

These powders have generally a brown-reddish to dark brown colour, with a particle size between 30 and 100 µm, and a specific weight between 0.7 and 1.8 kg/dm³; their composition varies depending on the type of steel which is manufactured, such as in the following examples:

| **Compound** | **Percentage (%)** |
|---|---|
| Fe₂O₃ | 25.00 - 75.00 |
| CaO | 0.10 - 15.00 |
| SiO₂ | 0.10 - 10.00 |
| Al₂O₃ | 0.10 - 5.00 |
| Cr₂O₃ | 0.10 - 10.00 |
| NiO | 0.10 - 8.00 |
| ZnO | 0.01 - 30.00 |
| PbO | 0.05 - 10.00 |
| MnO | 0.10 - 5.00 |
| CrO₄²⁻ | 0.01 - 3.00 |
| CuO | 0,01 - 1,00 |
| CdO | 0,005 - 0,10 |
| H₂O | 2,00 - 15,00 |

The idea of recycling the powders generated during melting processes in the same furnaces where they were obtained was already carried out in the past: the powder was collected in bags and thrown into the liquid bath; the next step consisted in preparing some pellets, which were introduced with the rest of the material to be melted. The result which was obtained was never such to justify said recycling process. The main problem consisted in that it was difficult to introduce the powders into the melting device in such a form that they could be actually melted again.

If the powder is introduced inside bags, as a result it is immediately sucked by the suction system. On the other hand, if the powder is introduced in form of pellets, these have a good surface strength, but the humidity rate within each pellet is rather high, and there is a high number of free particles, i.e. particles which are not bound together; therefore, due to the high temperatures of the melting bath, gases and water steam are rapidly eliminated, with the consequent breakdown of the pellet and the subsequent new suction of the powders thus generated by the intake system.

In order to achieve relevant results, we will have to face several problems; first of all, we will have to follow different methods according to the powder composition. For instance, the treatment the powders have to undergo is made difficult by the presence of some oxides, especially as far as the production of compound and stainless kinds of steel is concerned. Secondly, the powder humidity has to be taken into due consideration, since it can be one of the main reasons for the product's instability during its preparation. Moreover, the presence of other elements linked to the steel process in itself can give rise to further difficulty as far as the powder treatment is concerned.

These problems have been solved by turning to a particular form, the briquet, which is widely used in the metallurgical field, though till today it had not been taken into consideration for this specific use. The briquet prepared according to the present method has such structural features that make it particularly suitable to solve the problem here considered.

Once we have obtained the briquets with the necessary features, we have to take into consideration the problems related to the re-introduction of said briquets into the furnace; we will have to consider the normal operating conditions of the melting step, the loading methodology for the scraps, the iron alloys and the additives, and the slags features.

The present invention aims at providing a method for the recycling of the powders deriving from the working processes of steel or like, through the manufacture of briquets, such method allowing a high recovery of the precious metals contained in said powders, being easy to carry out within the same system used for the treatment of metals, and eventually reducing the amount of materials which have to be disposed of in the dump.

The present invention also aims at creating a briquet containing the aforesaid powders, such briquet ensuring a melting yield together with a high mechanical resistance.

The object of the present invention is therefore the recycling of the powders deriving from the working processes for steel or similar substances, through the manufacture of briquets, consisting of the following steps:
a) addition to the powders, stored in suitable containers, of a suitable primary binder, possibly a secondary binder and one or more additives;
b) mixing of the components added in the previous step;
c) compressing of the mixture thus obtained and forming of the briquets; and
d) introduction of the briquets into the furnace and melting.

Between the mixing and the compressing steps an additional step for the humidification of the mixture may be necessary.

Moreover, after the forming steps it may be necessary to carry out a drying step for the briquets, said step favouring on the one hand their solidification and increasing on the other their stability.

A further object of the present invention is a composition for the preparation of briguets, carried out according to the method of the present invention, characterised in that said composition contains 70 to 98% of a mixture of powders, with a particle size between 20 and 100 µm, including: Fe₂O₃ (25.00 - 75.00%), CaO (0.10 - 15.00%), SiO₂ (0.10 - 10.00%), Al₂O₃ (0.10 - 5.00%), Cr₂O₃ (0.10 - 10.00%), NiO (0.10 - 8.00%), ZnO (0.01 - 30.00%), PbO (0.05 - 10.00%), MnO (0.10 - 5.00%), CrO₄²⁻(0.01 - 3.00%), CuO (0.01 - 1.00%), CdO (0.005 - 0.10%), H₂O (2.00 -15.00%); one or more bonding agents, ranging between 2 and 27.5%, and possibly one or more additives, in a percentage between 0.5 and 2.4%.

It may be advantageous that the bonding agents are mainly products of vegetable origin, since this allows a better control of the environmental effects during the product's preparation. Moreover, such binders normally derive from rather common working processes, and are therefore easy to find and quite cheap.

Further advantages and features will be more evident through the following detailed description of an execution form of the method according to the present invention, which is carried out as a non-limiting example with reference to the enclosed drawings, where:
- Figure 1 is a schematic diagram of the method according to the present invention;
- Figure 2 is a schematic diagram showing a device for the manufacture of briquets according to the present invention;
- Figures 3 and 4 are two execution forms, shown with a sectioned perspective, of the briquet which has been carried out according to the method of the present invention.

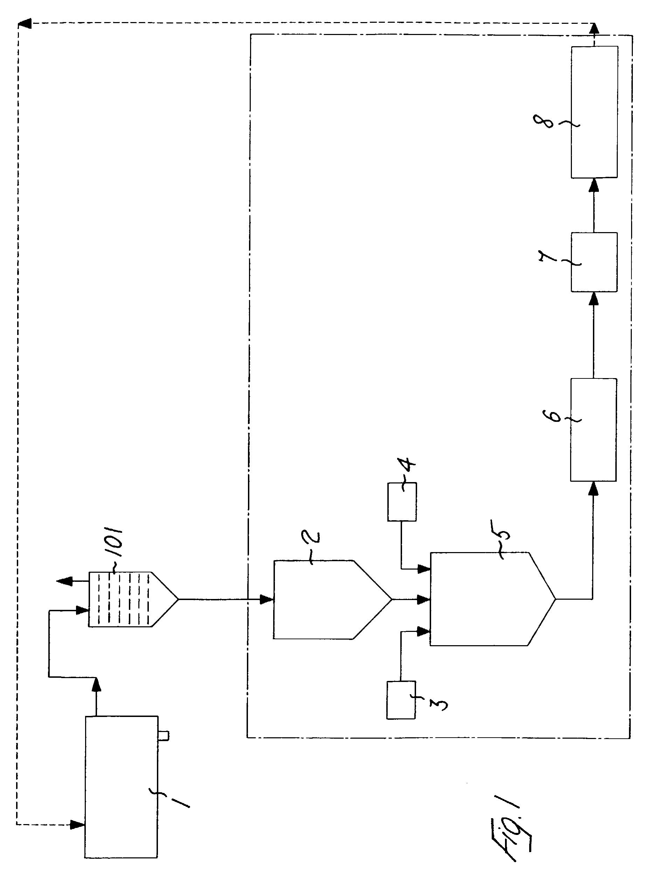

Figure 1 shows a schematic representation of the method according to the present invention. The fumes which are generated during the working processes of steel or like inside the furnace 1 are sucked and the powders, separated by means of the filter 101, are sent to the storing silo 2. The powders are then sent, together with one or more bonding agents 3, both solid and liquid, and possibly with additives 4, to the metering devices 5. They are mixed in the mixing devices 6, and then sent to the forming devices 7, where the mixture obtained in the mixing devices takes the shape of briquets. Successively, after a further step into the drying devices 8, the briquets are reintroduced into the furnace 1, both directly or possibly after being stored in suitable means (not shown here).

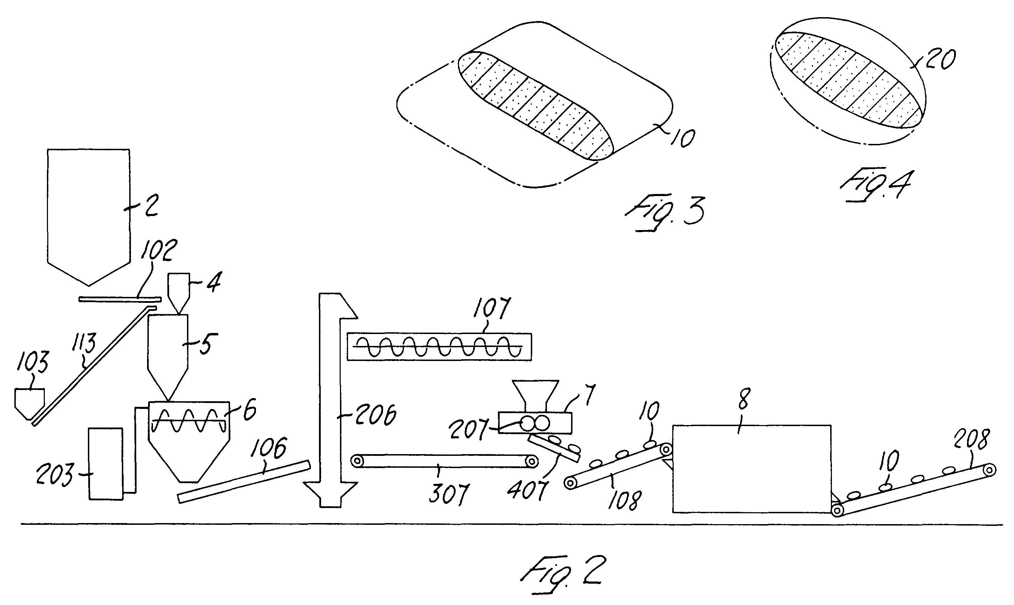

Figure 2 shows a schematic representation of a plant for the manufacture of briquets according to the method of the present invention. The numeral 2 indicates the silo where the powders taken out from the detection system of a melting furnace are stored. Said powders, by means of the conveyor 102, are directed towards the metering devices 5, for instance a hopper leaning onto loading cells, said hopper being controlled or not by a computer in case of a discontinuous working cycle. If the working takes place with a continuous cycle, the hopper can be replaced by several metering screw conveyors. The adding devices receive from the silo 103 the solid binder, conveyed by means of line 113, and from silo 4 the solid additives. The liquid binder, on the other hand, is contained in the tank 203 and is directly pumped into the mixer 6.

The mixer 6 can be equipped with nozzles to introduce water. The liquid binder can also be fed by means of a series of nozzles located inside the mixer. The time necessary for the mixing step can range, depending on the kind of binder, from 30 seconds to 5 - 10 minutes.

According to the mixture conditions, it is possible to use spade or blade mixers, or pan crusher mixers, the latter being particularly suitable if the binder is quite dense.

The conveyor 106 leads the mixture to the bucket elevator 206, which carries it to the screw conveyor 107. The screw conveyor 107 can be replaced by a mixing/humidifying device, equipped with nozzles.

Because of the great amount of air contained in the powders, it is generally advantageous for the whole process that the mixture is mainly carried by means of screw conveyors, whose function is also to pre-compress the material, thus favouring air elimination.

Successively, the mixture is transferred into the compactor 7, consisting of a press made up of two counter-rotating rollers 207, equipped, on their outside lateral surface (not shown in the figure), with a series of half-cavities shaped according to the form needed for the forming step of the briquets.

The briquets 10 thus formed are transferred to a sieve 407, which collects and separates them from the inevitable non-compressed powder and from small scales or fragments. The material which passes through the net of the sieve 407 will then re-enter circulation directly in the hopper above the press or in the last mixer/humidifier through the conveyor 307 and the bucket elevator 206.

Now the briquets 10 are directed to the dryer 8, where the possible surplus of humidity is eliminated and, according to the kind of binder used, the solidification of the briquets is concluded. The dryer 8 is preferably a hot-air tunnel, inside which run one or several bands made of perforated metal. The hot air is produced by means of a gas burner and forced to recirculate.

The temperatures within the drying chamber can vary from 90 to 250°C depending on the kind of binder used, and the duration of the drying cycle can similarly vary from 15 minutes up to 3 hours. Once the drying step is over, the briquets are directed out of the dryer, by means of the conveyor 208, to the storing in silos or to the re-melting in the furnace 1 (see Fig. 1). The briquets thus obtained have a good resistance and an average density which can range, depending on the powder composition and on the kind of binders and additives used, from 1.9 to 2.5 kg/dm³.

The amount of briquets introduced into the furnace depends on the kind of working, but it is generally not more than 5% by weight of the total furnace load. The loading methodologies can also vary, but some factors have to be taken into consideration. Firstly, the furnace should contain a liquid steel bath. Secondly, it is advisable, in case the briquets are loaded with scraps having a variable size, to load the briquets together with scraps having a smaller size.

The figures 3 and 4 show two forms of the briquet carried out according to the method of the present invention. Both the briquet 10 in Figure 2 and the briquet 20 in Figure 3 have similar features as far as the favourable volume/surface ratio is concerned, with respect, for instance, to spheroidal pellets; as a matter of fact, such shapes allow a high limitation of the temperature gradient between the surface and the inside portion, actually reducing the possibilities of breaking up. Both these two shapes, moreover, do not give rise to problems during the storing phase, and they are also advantageous for use during the melting step. The briquets according to the method of the present invention can vary in size, depending on the use they are meant for; preferably, their maximum width is within the range of 10-40 mm and their thickness within the range of 5-20 mm.

Many particular regards may be paid for the choice of a suitable binder, depending on the kind of powders produced during the working processes of steel.

The binders normally used are of vegetable origin, mainly sub-products deriving from the working processes of vegetable masses.

The binders can be both in solid and in liquid form; in the first case, a liquid component, generally water, will have to be added to the binder, which is a fine-particle powder. In case of a liquid binder, the latter will have to be kept at such a temperature that ensures an ideal viscosity. In both cases the amount of humidity, originally present or introduced later, will be of major importance in order to establish whether or not the briquets need to undergo the drying step described above. Among the solid binders which can be used to this purpose, industrial lignin and vegetable starch have shown a particular effectiveness.

Industrial lignin is a sub-product from the cellulose industry: it can be found on the market in form of a fine whitish or yellowish powder. Such binder is added to powders in a ratio ranging between 2 and 12% by weight, calculated on the powder weight, together with a certain amount of water, whose entity ranges from 2 to 15% by powder weight. In order to improve the stability of briquets in the course of time, it could be advantageous to add, to industrial lignin, bentonite (colloidal aluminium hydrated silicate); such adding can range from 1/3 of the amount of industrial lignin to the same amount as said binder. The briquets which are prepared by using this binder will have to undergo the drying treatment.

### Preparation example 1

To 100 kg of powders having the following composition: Fe₂O₃ (65.00%), PbO (0.7%), ZnO (0.2%), NiO (3%), Cr₂O₃ (4%), SiO₂ (4%), CaO (10%) 5 kg of industrial lignin, 4 kg of bentonite and 7 kg of water are added. The mixture thus obtained is used to prepare briquets according to the method previously described.

The vegetable starch used in the composition according to the present method is usually obtained from cereals working, and it is a fine or very fine powder; as for industrial lignin, its binding features are due to its mainly polymeric structure. This product, if on the one hand is slightly more expensive, on the other it is extremely effective and has irrelevant environmental effects. The starch is mixed with the powders with an amount varying from 3 to 10% by weight of the powders themselves, with water additions between 2 and 5%. Also the briquets obtained by means of this binder have to undergo a careful drying treatment.

### Preparation example 2

To 100 kg of powders having the following composition: Fe₂O₃ (55%), PbO (0.5%), ZnO (6.5%), NiO (0.15%), Cr₂O₃ (0.5%), SiO₂ (0.2%), CaO (7.5%) 6 kg of vegetable starch and 3 kg of water are added. The mixture thus obtained is homogenised in a mixer; the composition thus obtained is used to prepare briquets according to the previously described method.

Among liquid binders, those which are more suitable to the composition according to the method of the present invention are in particular two sub-products from the working of sugars, that is, molasses, the distillation residue of certain sugary liquids, and standardised boiled linseed oil.

Molasses is generally a thick brown-blackish liquid, containing the non-crystallizable sugars of the sugar eduction process and a high percentage of water. As far as the scope of the present invention is concerned, it has a very good agglomeration capacity and gives good results from the point of view of the resistance of the final product. A problem which may rise during its use is its high viscosity: in this case it would be advisable to use a pan crusher mixer, in order to achieve a better homogenisation of the composition. Moreover, the tank where the molasses is stored must be kept at a temperature between 20 and 30°C. The molasses is added to the powders with an amount of 4-12% by weight with respect to the powder weight, preferably adding 2-6% by weight of Ca(OH₂), calculated on the powder weight.

### Preparation example 3

100 kg of powders having the following composition: Fe₂O₃ (35%), PbO (0.10%), ZnO (25%), NiO (0.1%), Cr₂O₃ (0.1%), SiO₂ (1%), CaO (1.5%) are introduced into the mixer, adding then to such composition 6 kg of molasses and 4 kg of hydrated lime. The composition thus obtained is used to manufacture briquets according to the method previously described.

Standardised boiled linseed oil is linseed oil which has undergone a partial oxidation in order to improve its drying capacity and binding power. The hardening rate can be increased if suitable catalysts are added to the oil, such as cobalt or manganese octoate. The oil thus prepared is used in the composition according to the method of the present invention with an amount of 2-10% by weight with respect to powder weight. The tank containing the oil must be kept at a temperature of 20-30°C. The mixing time is quite low and the obtained composition is extremely homogeneous. However, this binder is rather expensive.

### Preparation example 4

100 kg of powders having the following composition: Fe₂O₃ (40%), PbO (0.1%), ZnO (15%), NiO (0.1%), Cr₂O₃ (0.1%), SiO₂ (1%), CaO (2%), are introduced into the mixer; 5 kg of standardised boiled linseed oil and 120 g of cobalt octoate are added to such composition. The composition thus obtained is used to manufacture briquets according to the method previously described.

The additives which are introduced into the composition according to the method of the present invention do not directly affect the working of the bonding agents, though they allow a better development of the manufacturing process and/or ensure a higher effectiveness of the briquets during the melting phase.

Additives such as calcium stearate allow a better detachment of the briquets from the forming moulds. This additive in particular is added in a ratio between 0.01 and 0,25% by weight of the powders.

Graphite can be added up to 1-2% by weight of the powders, and it plays the double function of lubricant and reducing agent during the re-melting of the briquets. The latter function, in particular, is accomplished by coke or anthracite powder, which is added in percentages between 1 and 2% by weight of the powders. A bigger particle size of the coke or anthracite powder can help the briquet cohesion.

Metallic Fe can also act as a reducing agent; moreover, it seems it can also act , during the remelting phase, as an aggregating nucleus for reduced Fe. Finally, it allows the increase in specific weight of the briquets. It is advisable to add an amount of it between 2 and 2.5%.

## Claims

1. Method for the recycling of powders deriving from the working processes for steel or like, through the manufacture of briquets, including the following steps:
a) metering of the powders, stored in suitable containers, with a suitable primary binder, possibly a secondary binder and one or more additives;
b) mixing of the components added in the previous step;
c) compressing of the mixture thus obtained and forming of the briquets; and
d) introduction of the briquets into the furnace and melting.

2. Method according to claim 1, characterised in that, between the mixing step and the compressing and briquet forming step, an additional step is carried out, consisting in a humidification of the mixture.

3. Method according to claim 1 or 2, characterised in that, after the compressing and forming step, a step including the sieving and recirculating of the non-compressed mixture is carried out.

4. Method according to any of the claims from 1 to 3, characterised in that, after the compressing and forming step, an additional step, including the drying of the briguets, is carried out.

5. Method according to any of the previous claims from 1 to 4, characterised in that the bonding agents include a primary solid bonding agent.

6. Method according to any of the previous claims from 1 to 4, characterised in that the bonding agents include a primary liquid bonding agent.

7. Method according to claim 5, characterised in that said adding step is carried out by means of a hopper which is fixed onto loading cells, and possibly controlled by a computer.

8. Method according to claim 5, characterised in that said adding phase is carried out by means of metering screw conveyors.

9. Method according to claim 6, characterised in that the primary bonding agent is directly introduced into the mixing devices, by means of suitable metering devices, such as a suitably calibrated pump.

10. Method according to any of the previous claims, characterised in that the mixing step is carried out within a mixing device equipped with spades or blades.

11. Method according to any of the previous claims from 1 to 9, characterised in that the mixing step is carried out within a mixing device equipped with pan crushers.

12. Method according to any of the previous claims, in which the compressing and forming step is carried out by means of a roller press.

13. Method according to claim 12, in which said press consists of two rollers with synchronous opposed rotation, equipped on their outside lateral surfaces with several half-cavities with a suitable shape.

14. Method according to any of the previous claims from 4 to 13, characterised in that said drying step is carried out at a temperature between 90 and 350°C, for a period varying from 15 minutes to 3 hours.

15. Method according to any of the previous claims from 1 to 14, characterised in that said step of charging of the briquets in the furnace is carried out in a bath of liquid steel.

16. Method according to any of the previous claims from 1 to 14, in which said step consisting of the introduction of the briquets into the furnace, includes the loading of the briquets together with scraps or from the furnace ceiling.

17. Composition for the preparation of briquets manufactured according to the method described in the previous claims from 1 to 16, characterised in that said composition includes 70 to 98% of a powder mixtures, with a particle size ranging between 20 and 100 µm, including: Fe₂O₃ (25.00 - 75.00%), CaO (0.10 - 15.00%), SiO₂ (0.10 - 10.00%), Al₂O₃ (0.10 - 5.00%), Cr₂O₃ (0.10 - 10.00%), NiO (0.10 - 8.00%), ZnO (0.01 - 30.00%), PbO (0.05 - 10.00%), MnO (0.10 - 5.00%), CrO₄²⁻(0.01 - 3.00%), CuO (0,01 - 1,00%), CdO (0,005 - 0,10%), H²O (2,00 - 15,00%); one or more bonding agents, with a ratio ranging from 2 to 27.5%, and one or more possible additives, with a percentage between 0.05 and 2.5%.

18. Composition according to claim 17, characterised in that the bonding agents used are mainly products of vegetable origin.

19. Composition according to claim 17 or 18, characterised in that said bonding agents include a primary solid bonding agent.

20. Composition according to claim 19, characterised in that said primary bonding agent is industrial lignin.

21. Composition according to claim 19, characterised in that said primary bonding agent is vegetable starch.

22. Composition according to any of the claims from 19 to 21, characterised in that said bonding agents include a secondary liquid binder.

23. Composition according to claim 22, characterised in that said secondary liquid binder is water.

24. Composition according to claim 17 or 18, characterised in that said bonding agents include a primary liquid bonding agent.

25. Composition according to claim 24, characterised in that said primary bonding agent is a by-product obtained from the working of sugars, such as molasses or the distillation residue of certain sugary liquids.

26. Composition according to claim 24, characterised in that said primary bonding agent is standardised boiled linseed oil.

27. Composition according to claim 24, characterised in that said bonding agents include a secondary solid bonding agent.

28. Composition according to claim 25 and claim 27, in which said secondary bonding agent is Ca (OH)₂.

29. Composition according to claim 24, characterised in that said bonding agents include a secondary liquid bonding agent.

30. Composition according to claim 26 and claim 29, in which said secondary bonding agent is Co- or Mn-octoate.

31. Composition according to any of the previous claims from 17 to 30, characterised in that said additives include lubricating substances.

32. Composition according to claim 31, in which said additives include calcium stearate.

33. Composition according to any of the claims from 17 to 30, in which said additives include reducing additives.

34. Composition according to claim 31 or 33, in which said additives include C in form of graphite.

35. Composition according to claim 33, in which said additives include C in form of coke and/or anthracite powder.

36. Composition according to claim 33, in which said additives include metallic Fe.

37. Briquet, produced by the method described in the claims from 1 to 16, by using the composition according to the claims from 17 to 36.

38. Briquet according to claim 37, characterised in that said briquet has a substantially rectangular shape, with a spindle-shaped section, with rounded apexes and corners.

39. Briquet according to claim 37, characterised in that said briquet has a substantially ellipsoidal shape.

40. Briquet according to claim 38 or 39, characterised in that its maximum width is in the range of 10-40 mm, and in that its maximum thickness is in the range of 5-20 mm.
